# EUROPEAN PATENT APPLICATION

(11) **EP 4 439 328 A1**
(43) Date of publication of application: **02.10.2024**
(21) Application number: 23315075.4
(22) Date of filing: 31.03.2023
(51) Int. Cl.: G06F 16/21

(54) **DATABASE SEARCH PROCESSING**

(71) Applicant: Amadeus S.A.S., 06410 Biot (FR)
(72) Inventor: CHEINET, Antoine, 06410 Biot (FR); DEVAUX, Yannick, 06410 Biot (FR); VINCIGUERRA, Jean-Pascal, 06410 Biot (FR); GALOPO, Michael, 06410 Biot (FR); SDIRI, Mohamed, 06410 Biot (FR); SAVINI, Anne, 06410 Biot (FR)
(74) Representative: Samson & Partner Patentanwälte mbB

(57) **Abstract**

A search engine determines, based on a current configuration and a received search request, a number of processing parameters indicative of processing resources of the search engine to be utilized for processing the search request. The search engine determines a number of search results for the search request utilizing the processing resources of the search engine according to the number of processing parameters and returns a number of search results. The search engine determines a number of quality-of-service indicators for the returned search results and logs a state of the search engine indicating the processing resources of the search engine utilized for determining the number of search results and quality-of-service indicators. The current configuration of the search engine is updated based on the logged state of the search engine and the determined number of quality-of-service indicators to obtain an updated configuration of the search engine for processing future search requests.

## Description

### FIELD

This disclosure generally relates to information technology. More specifically, the disclosure relates to processing search requests in an information technology search environment.

### BACKGROUND

Search systems in information technology face increased level of complexity and volume. Search request traffic continuously and quality-of-service requirements increase at the same time. Search request processing also may feature dynamic computation of search results at search request times. In distributed search systems, search results or underlying computation data may also be retrieved from distributed data sources. Higher standards of quality of service such as short response times cannot solely be maintained by more performant hardware.

Hence, generally, methodologies are sought which facilitate efficient processing of search requests.

### SUMMARY

The present mechanisms are set forth by the independent claims.

According to a first aspect, a method for processing a search request in a computerized search system is provided. The search request is received at a search engine of the computerized search system. Based on a current configuration of the search engine and the search request, a number of processing parameters indicative of processing resources of the search engine to be utilized for processing the search request are determined. The search engine then determines a number of search results for the search request utilizing the processing resources of the search engine according to the number of processing parameters. The search engine returns at least a part of the number of search results. A number of quality-of-service indicators for the returned search results are determined and a state of the search engine is logged which indicates the processing resources of the search engine actually utilized for determining the number of search results and the number of quality-of-service indicators for the returned search results.

The current configuration of the search engine is updated at some point based on the logged state of the search engine and the determined number of quality-of-service indicators to obtain an updated configuration of the search engine for processing future search requests.

In some embodiments, the processing parameters include one or more of a degree of parallelization, a number of search results to be determined, a number of search results to be returned, an amount of central processing unit resources, a polling measure, a caches utilization measure, a machine learning utilization measure, a routing indication, a search processing time limit.

In some embodiments, the quality-of-service indicators include a search result selection rate, a response time, a search result accuracy, a search result diversity measure.

In some embodiments, the method further comprises determining a sustainability score being indicative of an environmental impact of the processing resources utilized for determining the number of search results, the sustainability score being a part of the current configuration.

In some embodiments, the search engine utilizes a reinforcement learning model to determine the number of processing parameters based on the sustainability score.

In some embodiments, the current configuration is applied for a number of search requests received within a given time period.

In some embodiments, updating the current configuration is performed at the end of the given time period based on logged states and the quality-of-service indicators for the number of search requests received within the given time period.

In some embodiments, the sustainability score reflects processing parameters indicating accumulated search processing resources utilized for processing the number of search requests received within the given time period.

In some embodiments, the method further comprises: in response to determining that a value of accumulated quality-of-service indicators for the number of search requests received within the given time period exceeds a quality-of-service threshold, updating the current configuration to reduce the search processing resources to be utilized to process future search requests.

In some embodiments, the method may also comprise: in response to determining that a value of accumulated quality-of-service indicators for the number of search requests received within the given time period falls short of a quality-of-service threshold, updating the current configuration to increase the search processing resources to be utilized to process future search requests.

In some embodiments, the method includes in response to receiving one search request of the number of search requests within the given time period, determining, based on the current configuration, to utilize no search processing resources. The search engine then returns a search refusal notification.

In some embodiments, the method includes updating the current configuration is performed at a periodic basis.

In accordance with a second aspect, a search system is arranged to perform any one of the aforementioned method aspects and embodiments. At least part of the method aspects may be performed by a search engine of the search system which processes search requests.

In accordance with a third aspect, a computer program is provided which makes one or more processors of a computer to execute the aforementioned method aspect when the computer program is run on the computer.

Further refinements of the aspects and embodiments are set forth by the description.

### BRIEF DESCRIPTION OF THE FIGURES

Aspects and examples of the present disclosure are described with reference to the following figures, in which:
FIG. 1 schematically shows an exemplary search system implementing the present methodologies.
FIG. 2 visualizes a message sequence at a higher level of granularity.
FIG. 3 is a flowchart presenting activities of the methodologies described herein.
FIG. 4 schematically depicts a search engine with the configuration and a log.
FIG. 5 shows a computerized system for implementing a server, database system and/or client device as described herein.

### DETAILED DESCRIPTION

The present disclosure addresses a technical problem in information technology, and more specifically in search systems which process search requests from a client. A search request sent by and received from a client includes one or more search parameters, i.e. one or more parameter-value pairs, which indicate a strict or fuzzy search space limitation. The search system typically includes one or more search engines, i.e. a computerized machine, equipped with hardware and software to process the search request, take measures to identify search results corresponding to the search parameters and returning, if at least one search result has been identified, the at least one search result to the requesting client.

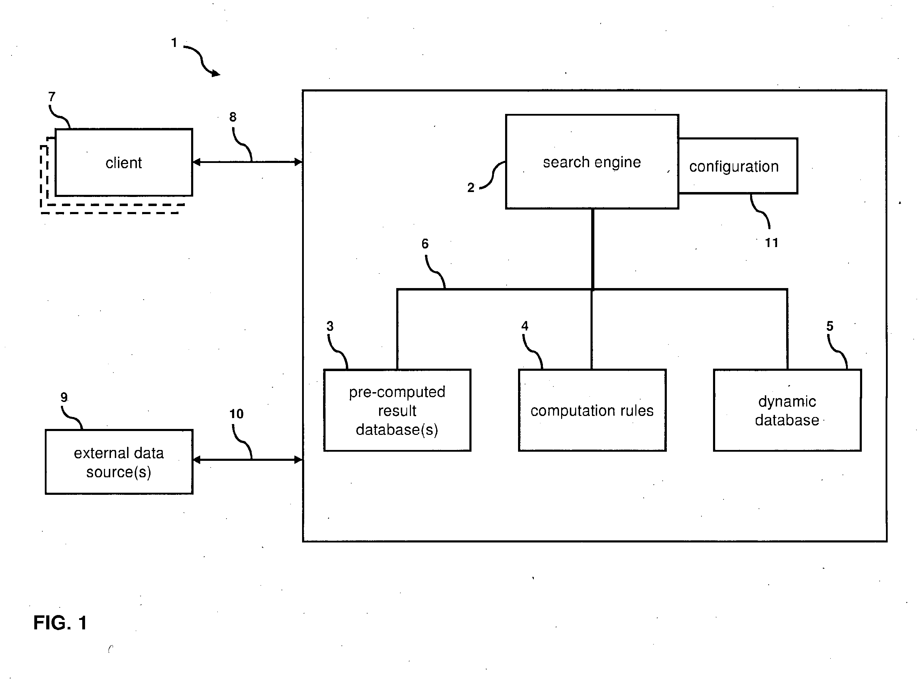

A typical, simplified and schematic search system 1 is shown by FIG. 1. The search system 1 includes the search engine 2 which is communicatively coupled to one or more clients 7 over a communication interface 8. The communication interface 8 may utilize any sorts of communication technology such as wired and/or wireless communication and/or mobile communication networks, one or more local area network, and/or one or more wide area networks such as the Internet, as well as any sorts of communication protocols such as WiFi, Ethernet, Internet Protocol (IP), Transport Control Protocol (TCP), Hypertext Transfer Protocol (HTTP) and others. Search requests from the client(s) 7 and responses to the search requests are sent over the communication interface 8.

Typically, the search engine 2 may also have access to internal data sources which may be geographically and/or operationally co-located (as visualized by the outer box in FIG. 1, e.g. part of a local area network or virtual local area network) with the search engine 2. For example, the search engine 2 may be communicatively coupled, via a further communication interface 6, to one or more caches such as pre-computed result database(s) 3. Typically, such pre-computed result database(s) 3 may provide access to pre-computed search results in an efficient way in terms of computation resources and network load, but there may be a possibility that one or more of the pre-computed search results are outdated at the time of retrieval by the search engine 2.

On the other hand, the search engine 2 may also be capable of computing search results dynamically in response to receiving a search request. To this end, for example, the search engine 2 accesses a database including computation rules 4 as well as a data source including underlying data for dynamically computing one or more search results using the computation rules, such as dynamic database(s) 5. A non-limiting, purely illustrative example is the computation of a price of a travel offer based on fares, wherein the fares are determined in correspondence with at least a part of the search parameters. Typically, such dynamic computation is more costly in terms of computation resources, response time and network load compared to retrieving a number of cached search results from the pre-computed result database(s) 3.

At still another level, the search engine may be interconnected to one or more external data sources 9, via still a further communication interface 10. The external data source may provide other or further search result corresponding to the search parameters. Again, an external data source may respond with cached/pre-computed search results and/or search results dynamically computed at request time.

These different ways to identify one or more search results are not mutually exclusive, but may be employed in parallel, in sequence, or in a combined manner. For example, the search engine 2 may retrieve underlying data from an external data source 9 to populate or update the underlying data held in the dynamic database(s) 5 and then dynamically compute a number of search results using computation rules 4 and the underlying data in the dynamic database(s) 5. A non-limiting, purely illustrative example concerns availability of items in a web shop sought by a search request. The current availability of the items may first be determined by contacting the provider of the times, i.e. the external data source(s) 9. Insofar the items are available, the current price and delivery time is calculated by the search engine 2 using computation rules 4 previously and asynchronously provided by the providers.

The search engine 2 further has freedom to employ different degrees of technical resources to process a search request. Dimensions and processing parameters may include
- time utilized for identifying the search results and corresponding response time from the perspective of the client;
- data sources to be utilized for identifying the search results, e.g. cache only, no retrieval from external data source(s) 9, and distributions among the data sources to be contacted, e.g. a polling factor indicating a relation between requesting external data sources and local search result identification;
- number of search results to be identified, e.g. at least 100 search results;
- number of search results to be returned to the client, i.e. at least 10 search results;
- amount of computation resources, e.g. central processing unit (CPU) resources, memory resources, disk resources, network resources,
- accuracy of search results, e.g. measures of validating pre-computed search results;
- diversity of search results, e.g. heterogeneity of parameter values of identified search results;
- degree of parallelization, e.g. contacting a certain number of external data sources in parallel vs. contacting only a smaller number of external data sources first and then conditionally retrieving further search results from still other data sources only subsequently;
- findability of search results, e.g. variation of search parameters in order to increase likelihood that a certain type or category of search results is not missed.

This list is not exhaustive and other variations and degrees of freedom how much resources are employed to process a given search results may be used by the search engine. The technical problem addressed by the present methodologies is to render processing search results more efficiently given the aforementioned complexity and degrees of freedom to employ technical resources available to the search engine 2.

Solutions are provided in form of methods, systems, apparatuses, computer-readable mediums, computer-program instructions, computer programs etc. for processing a search request. Generally, the present methodologies seek to dynamically adjust the technical measures utilized for processing a search request and thus dynamically adjust the quality of service of search request processing. The general aim is to fine-tune the efforts taken for processing a search request in order to utilize the available technical resources of the search system 1 efficiently. The present methodologies can thus provide improvement options in terms of scalability, search processing complexity, coping with a significant increase of search request volume and efficient use of energy observing the environmental impact of search processing.

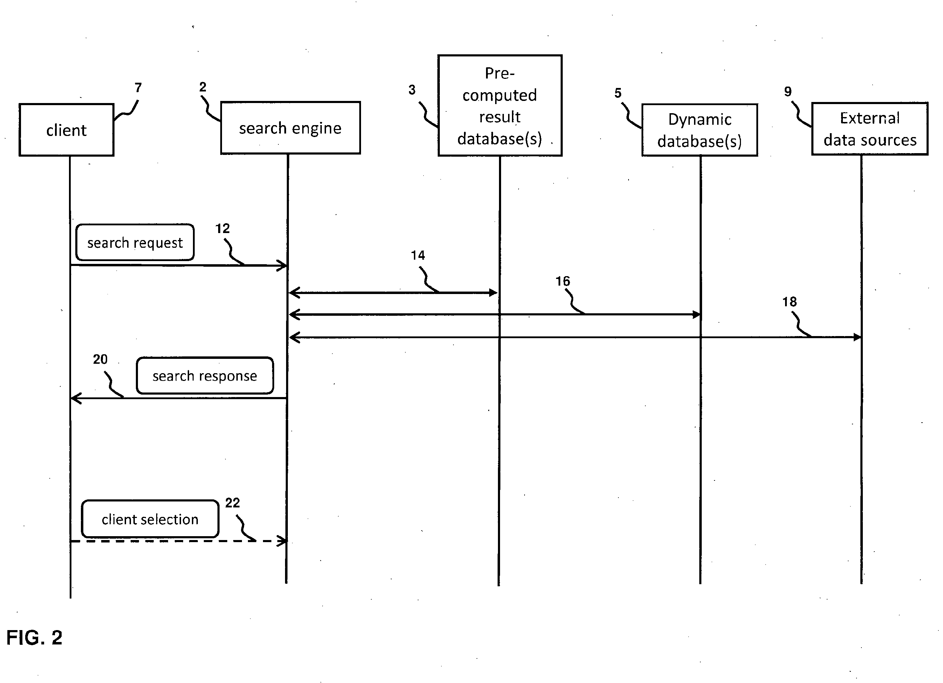

The methodologies are executed at the search engine 2 for a search request received from a client 7, such as search request 12 shown in FIG. 2. Hence, the methodologies are applied for an individual search request and at search request time. The search request may be realized by and according to any suitable search request protocol such as structure database query protocols, application request/response protocols, web-based request/response protocols, etc. The data structure of the search request may include a header portion indicating control data such as a request type, an indication of the requesting client, an indication of one or more quality of service requirements, and so on, as well as a payload portion containing a number of search parameter-value pairs.

FIG. 2 provides a message sequence chart outlining a general flow of search request processing. The client 7 issues a search request 12 which is received by the search engine 2. The search engine 2 processes the search request 12 according to the methodologies discussed herein. Processing the search request 12 may involve one or more of retrieving 14 cached search results from one ore more pre-computed result database(s) 3, computing search results by utilizing 16 dynamic database(s) 5 and requesting and retrieving 18 search results from external data source 9. At some point, the search engine 2 has determined a number of search results. Generally, one or more of the determined number of search results are then returned to the client 8 by way of a search response. The search response may include multiple messages. For example, the search engine 2 may return the search results incrementally dependent on the times when the search results are determined by the search engine. For example, search results determined by utilizing the pre-computed result database(s) 3 may be available for transmission to the client 7 earlier than search results determined by retrieval 18 from the external data sources 9.

At some later point in time, the client 7 may indicate a client selection 22 to the search engine 2 by which a subset of one or more of the search results returned which the search response 20. The selected search results may trigger a follow-up processing by the search system 1, such as a follow-up search process handled by the search engine 2 typically employing the same methodologies as the initial search request. Such follow-up search process may e.g. concern a search for search results related to the selected one or multiple search results, e.g. an upsell transaction, a gift packaging, an add-on purchase, or the like, or a follow-up process such as a download, upload or write, booking, purchase, reservation, payment, or any other process relating to the one or more selected search results. Such follow-on process may typically handled by another entity of the system 1 or even by an entity outside system 1, such as a reservation engine or a payment server or the like. Hence, the client selection 22 may also be directed to such other entity within or outside the system 1.

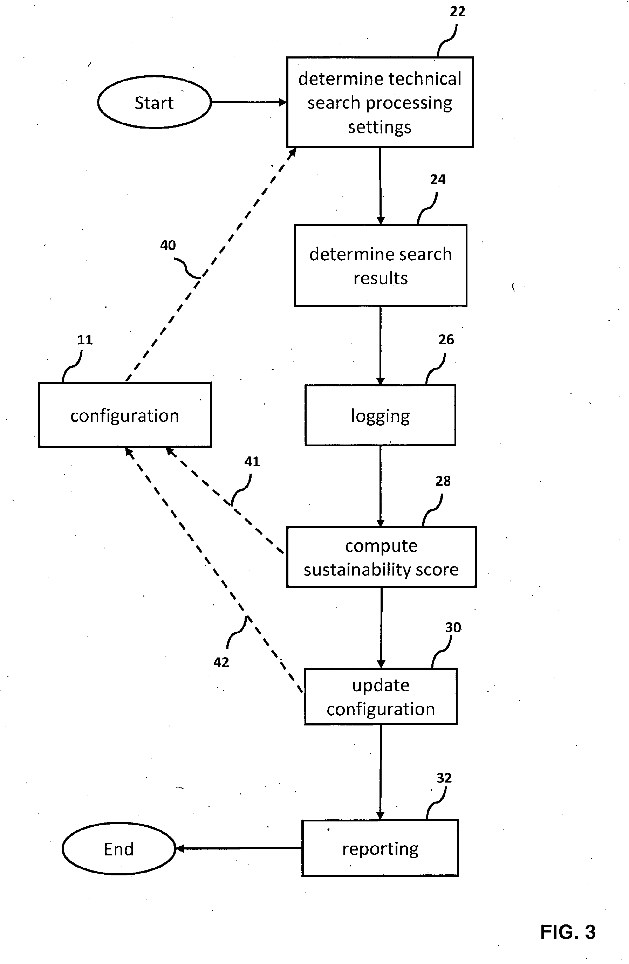

The general mechanisms of the present disclosure can be discussed with reference to FIG. 3 which visualizes various activities which are typically performed within a time period (such as 8 hours) in which a plurality of search requests are received. In response to receiving the search requests, the search engine 2 determines 22, based on a current configuration 11 of the search engine 2 (cf. also FIG. 1) and the search requests, a technical search processing setting, which includes a number of processing parameters indicative of processing resources which the search engine is allowed to utilize for processing the search request. The processing parameters relate to technical resources available to the search engine and determine which technical resources and amount of the technical resources are available to be used for processing a current search request. The actually used processing resources of the search engine may exhaust these target processing parameters, but may also be less than the target processing parameters.

For example, in some embodiments, the processing parameters include one or more of
- a degree of parallelization: As visualized in FIGS. 1 and 2, the search engine 2 may determine the search results by utilizing multiple sources such as caches (pre-computed result databases 3), dynamic databases 5 and/or external data sources 9. Each of these types of sources for determining the search results may by formed by one or multiple sources, e.g. K caches 3, N dynamic databases 5 and M external data sources 9. The degree of parallelization may determine how many sources, absolutely or for a given type of sources, the search engine 2 may contact in parallel. For example, the degree of parallelization may indicate that the search engine 2 requests three external data sources 9, such as three service providers, at the same time to provide search results corresponding to the search parameters. Generally, the higher the degree of parallelization is, the higher the chance to obtain relevant search results may be, but also the computational efforts including network load increases.
- a caches utilization measure: this indicates whether or not the search engine 2 utilizes any caches such as the pre-computed result database(s) 3 to determine the search results. Utilizing caches may be computationally-wise less expensive than utilizing other data sources such as dynamic databases 5 and/or external data source 9, but search results originating from caches may be outdated or less valid. The caches utilization measure may indicate whether or not caches such as the pre-computed result database(s) 3 are to be utilized for processing the search request.
- a polling measure: likewise, this indicates whether or not the search engine 2 utilizes any original data sources such as the external data sources 9 to determine the search results. Utilizing external data sources 9 may be computationally-wise and network-load-wise more expensive than utilizing cache data sources or data sources internal to the search engine 2, but search results originating from external sources 9 may likely or with certainty be valid. The polling measure may indicate a number of queries to such external or original data sources, such as an absolute number of queries per time unit (e.g. 100 per hour) or a relative portion of overall queries to data sources (e.g. 10% of contacted data sources may be external or original data sources).
- a provider contribution indication: The search engine 2 may have freedom to utilize external data sources in different manners, e.g. by cascading requests to external sources pending intermediate outcomes of basic requests to external sources. In practice, there may also be different types of external sources such as faster and slower external sources, primary and secondary external sources, external sources providing basic search result data and external sources providing refinement or add-on search result data. The provider contribution indication may indicate which providers the search engine 2 may contact in which manner. For example, restricting requests to certain external sources may avoid additional processing resulting of the delegation to a third-party system. Note that the provider contribution indication may be included in the polling measure.
- an amount of processing unit resources: The search engine 2 may utilize various levels of computational resources to determine the search results. For example, the search engine 2 may be equipped with multiple central processing units (CPU), CPU clusters, graphical processing units (GPU) to employ machine learning (ML) mechanisms, and so on. The indicator of an amount of processing unit resources may indicator how much processing resources are to be utilized for determining the search results. This indicator may be measured e.g. in processing time, a number of processing units to be utilized, an amount of instructions, etc.
- a number of search results to be determined: This indicates the number of search results to be determined by the search engine 2. Based on the number of determined search results, the search engine 2 may select a subset of search results to be returned to the client. Generally, the higher the number of search results is, the higher the chance to obtain relevant search results may be, but also the computational efforts including network load increases.
- a number of search results to be returned: This indicates the number of search results to be returned to the client 7 by the search engine 2. Based on the number of determined search results, the search engine 2 may select a subset of search results to be returned to the client. Generally, the higher the number of search results is, the higher the chance to obtain relevant search results may be, but also the computational efforts including network load increases.

- a machine learning utilization measure: the search engine 2 may utilize machine learning mechanisms to intelligently determine the search results. Such machine learning mechanisms may involve computational-expensive executions e.g. by GPUs or special hardware.
- a routing indication: the search engine 2 may utilize computation resources such as modules or units which are associated with the search engine 2, such as server farms and/or cloud services. The routing indication may indicate how many or which of such modules or units can be utilized by the search engine 2, i.e. to which of these units or modules the search engine 2 relays or routes requests to process the search response.
- a search processing time limit: amount of time which the search engine 2 takes to process the search request.
- a search result complexity measure: The complexity and size of search result may vary. The search result complexity measure may indicate e.g. that the search engine composes search results with a simplified data structure as opposed to more complex data structure. In terms of e.g. products represented by the search results (e.g. in case of a web shop), a more complex search result may be a bundle of multiple products whereas simplified search results may relate to individual products. In terms of e.g. travel offers, a simplified search result is a direct flight, whereas a more complex search result may relate to a multi-leg flight connection. Making the search engine 2 to provide less complex search results may simplify the search process by avoiding . costly search result construction in terms of search processing resources. Hence, the search result complexity measure may be considered as an indirect processing parameter having an indirect impact on the processing resources to be utilized by the search engine 2.
- a personalization indication: The search engine 2 may have freedom to take into account personalization, e.g. preferences specified by a client profile. Such personalization may generally cause a higher utilization of processing resources, while as conducting the search generically may lead to a lower utilization of processing resources. Thus, similar to the search result complexity measure, the personalization indication may be considered to be an indicated processing parameter. Note that the personalization indicator could be included in the above search result complexity measure.
- a search side-processes indication: Search processing by the search engine 2 may also encompass secondary processes which do not directly yield the determining of search results, but constitute additional actions in the course of search processing. For example, the search engine may log the search process (beyond the logging functionalities for the present methodologies explained below), such as logging the search request and a summary of the returned search results. The search engine 2 may also cache some or all of the returned search results, and even search results which were determined, but not returned to the client 7. The search engine may also output reports or communicate information about the search for any purposes. The processing resources utilized for such side processes may be specified and limited by the search side-processes indication.

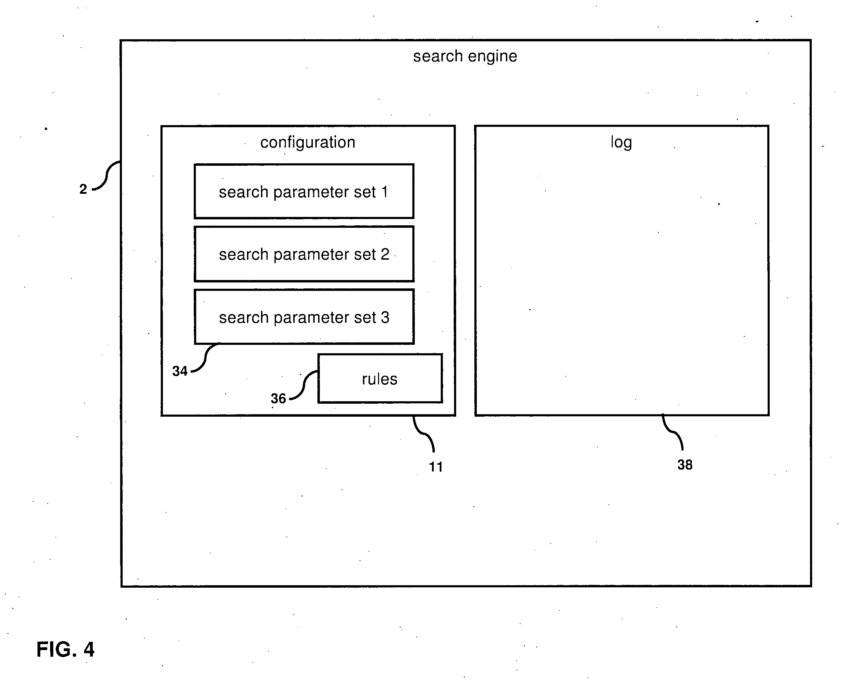

The configuration 11 of the search engine 2 enables the search engine 2 to determine 22 a set of processing parameters based on the search request. For example, the configuration 11 may include multiple given sets 34 of processing parameters (FIG. 4) from which the search engine selects one set of processing parameters to be applied for the present search processing. For example, a first set of processing parameters (FIG. 4) may specify a light-weight search processing employing relatively few technical resources in order to provide search results relatively fast and cheap (in terms of processing resources). A second set of processing parameters may specify a heavy-weight search processing employing substantially more technical processing resources`than the light-weight search processing. And a third set of processing parameters may specific a medium-weight search processing employing more technical resources than the light-weight search processing, but less technical resources than the heavy-weight search processing. Any number of such given sets of processing parameters may be configured and from a part of the configuration 11 of the search engine 2. In some embodiments, the configuration 11 may not or not only include such configured sets of processing parameters, but configuration parameters and routines enabling the search engine to freely and dynamically determine the processing parameters for the present search request.

The selection of a set of processing parameters and/or a dynamic determination of the processing parameters using the configuration 11 may be performed based, at least partly, on the search parameters included in the search request. For example, for a particular set of search parameters and/or a particular range of search parameter values, the light-weight search processing as specified by the configuration 11 is to be performed, while for another set of search parameters and/or another range of search parameter values, the medium-weight or heavy-weight search perform is to be performed. The configuration 11 then maintains e.g. corresponding rules 36 (FIG. 4) defining such relations between search parameters/value ranges and processing parameters to select one of the search processing parameter sets 34 (or determine the technical processing parameters freely). The rules 36 and the corresponding processing parameters of the configuration 11 are accessed 40 (FIG. 3) in order to facilitate determining 22 the search processing settings. In some embodiments, the rules 36 may be implemented in an intelligent manner, e.g. by machine-learning mechanisms such as a reinforcement learning model.

The selection of a set of processing parameters and/or a dynamic determination of the processing parameters may also be performed based, at least partly, based on further indications, e.g. in dependency from the client 7, a client type, a user, a user profile, search history related to the requesting client and/or user, quality of service agreements in place for the client and/or user. To this end, the search request includes respective indications identifying the client, the client type, the user and/or the user profile. Such indications are then read by the search engine 2 and used to determine the processing parameters. For example, the search engine 2 may read a user identification included in the header portion of the search request and utilize the user identification to locate, retrieve and apply a user profile relating to the user in order to decide e.g. whether the present search for this user is to be processed as a light search processing or a heavy search processing. Alternatively or in addition, the client type may be indicated to be a mobile phone of a given type. The rules 36 may prescribe that for this client type, e.g. 20 search results are to be returned (as opposed to a higher number of search results such as 100) as the display size of this mobile phone type is limited. Accordingly, the search engine 2 is further made by the rules 36 to determine 40 search results (as opposed to a higher number of search results such as 400) from which the 20 search results to be returned by the search response are selected. Further factors for determining the processing parameters based on the configuration 11 may be taken into account by the rules 36 as well.

The selection of a set of processing parameters and/or a dynamic determination of the processing parameters may also be performed based, at least partly, based on a current or past load and consumption of technical resources at the search engine 2. For example, the configuration of the search engine 2 may indicate a budget of technical resources for a given period of time which is not to be exceeded or to be exceeded only in special situations. The determination of the processing parameters may then also take into account the portion of the budget of technical resources which has not yet been consumed and is still available to the search engine. The factors for determining the processing parameters based on the configuration 11 may be taken into account by the rules 36 as well as described above.

In some embodiments, as already briefly mentioned above, the search engine 2 utilizes a reinforcement learning model to determine the number of processing parameters based on a sustainability score, as explained in further detail below. In such embodiments, a reinforcement learning algorithm may be implemented which dynamically sets the value of the processing parameters for a search request (the action of the reinforcement learning algorithm) and that collects the resulting sustainability score (the reward of the reinforcement learning algorithm). The reinforcement learning algorithm thus continuously assesses and applies an optimized processing level for the search requests received from the clients 7.

This assessment and optimization may include exploitation and exploration times or portions in accordance with established reinforcement learning methodologies. For example, the reinforcement learning algorithm may treat a part of the search requests received during the given time period in an exploration mode, varying the configuration for these search results in order to explore whether or not such variation of the configuration yields to an increased search processing efficiency (gaining a higher quality of service by utilizing a similar amount of technical processing resources or achieving a similar quality of service with less technical processing resources). If such exploration yields an efficiency improvement, a subsequent update of the configuration may adopt the results from the exploration mode and the reinforcement learning algorithm may exploit the configuration settings of the exploration mode for all search requests received during a subsequent time period. In a further subsequent time period, the reinforcement learning algorithm may again treat a part of the search results differently in exploration mode for further fine-tuning, and so on. Explorations may also be conducted on a higher frequency (e.g. for parts of time intervals of configuration updates), i..e more dynamically than configuration updates.

Note that the aforementioned examples of processing parameters and other processing parameters may not necessarily be determined as definite numbers (e.g. 3 CPUs to be used), but may also be determined in the form of ranges (e.g. 2-4 CPUs may be used). In addition or alternatively, such ranges determined according to the configuration 11 may represent boundaries to constrain any exploration. For example, an exploration should not set a processing time limit to zero because this is considered to yield most efficient response time or set the number of processors to zero in order to utilize the least processing resources. Hence, the configuration 11 may prescribe lower (and potentially also higher) boundaries which should not be undercut and exceeded, respectively.

The search engine 2 then takes measures to determine 24 a number of search results for the search request utilizing the processing resources of the search engine according to the number of processing parameters. The measures to determine 24 the number of search results observe the previously determined processing parameters. For example, the processing parameters specify that the search processing includes contacting three external data sources 9 in parallel, the search engine 2 identifies three external data sources 9 to be contacted based on the search parameters of the search requests and submits corresponding search requests to these three external data sources 9.

At the end of the search processing 24 or after having concluded the search processing 24, the search engine 2 logs 26 a state of the search engine 2 indicating the technical processing resources of the search engine 2 which have been actually utilized for determining the number of search results. For example, the search engine 2 logs the amount of CPU resources, the memory utilization, the network resources consumed, time spent for the search processing. These may correspond to the processing parameters determined before the search processing, but may also be less than the processing parameters as the latter ones set a target or an upper limit for the search engine 2 for process the search request. Hence, the amount of actually used technical processing resources is within the limits of the processing parameters determined 22 beforehand, but may also be less than these limits. For example, the processing parameters may have allowed for spending a certain CPU time for determining the search results and have prescribed a certain number of search results to be returned to the client 7, but the number of search results to be returned to the client was in fact determined by spending less CPU time than allowed. The search engine 2 then logs the CPU time actually used for processing the current search request.

The search engine 2 also determines a number of quality-of-service indicators for the returned search results. The quality-of-service indicators may include one or more of:
- a search result selection rate: Feedback from the client 7 received on the basis of the search response may be evaluated. In particular, the client 7 may select one or more of the returned search results and provide a client selection 22, as described above with reference to FIG. 2. The search result selection rate may indicate if the client 7 reverts back to the search system 1 with a client selection at all, and, if affirmative, how many and/or which search results have been selected. This client selection 22 may constitute an indication of the quality of the service of the search processing by the search engine 2.
- a response time: This indicates a time passed between search request reception and search response return. The less time it took for returning the search response, the higher the quality of service of the search processing may be considered.
- a search result accuracy: This may indicate the portion of search results returned to the client which were likely valid compared to such search results which were not likely valid. Indications of validity probabilities are e.g. age of the search results precomputed in the database(s) 5 or any other cache, or a validation with any original data source.
- a search result diversity measure: The search engine 2 may evaluate at least a part of the contents, such as data field values, of the search results returned to the client 7 and prepare a normalized measure (e.g. a number between 0 and 100) representing the diversity of the search result contents. For example, in a network routing request use case, the search diversity measure may reflect a number of different network carriers, a number of different network routes and hops, variation of assured technical parameters such as bandwidths, throughputs, delays, encryption, etc. In order to keep computational efforts within given limits, a given number of data fields of the search results can be selected for establishing the search result diversity measure. Generally, the more diverse the search result content was, the higher the quality of service of the search processing may be considered.
- a client feedback: The client 7 or the user of the client 7 may be requested to return an indication how satisfactory the search processing was. The client feedback could, for example, correspond to school marks from 1 to 5 (e.g. 1 indicating very satisfactory, 5 indicating very unsatisfactory).

The determined quality-of-service indicators are logged 26 as well. The log data representing the logs of the technical processing parameters and/or the quality-of-service indicators may be stored in a log 38 (FIG. 4) of the search engine 2. Note that while the example of FIG. 4 shows the configuration 11 and the log 38 to form a part of the search engine 2, the configuration 11 and/or the log 38 may also be located outside the search engine, e.g. in a database of the system 1 or an external storage location such as a cloud server.

The search engine 2 returns at least a part of the number of search results to the requesting client 7 (response 20 in FIG. 2).

The search engine 2 updates 30 the current configuration 11 of the search engine based on the logged state of the search engine and the determined number of quality-of-service indicators to obtain an updated configuration of the search engine for processing future search requests. The update may be performed by a dedicated module within the search system 1, such as an optimizer module. The configuration does not need to be updated at the level of individual search request processing. Rather, in some embodiments, updating 30 the current configuration is performed at the end of the given time period based on logged states and the quality-of-service indicators for the number of search requests received within the given time period. Hence, the current configuration 11 is applied for a number of search requests received within a given time period (such as the exemplary search request 12 described above), i.e. the term "current" refers to the configuration which is active and applied during such given time period. An update of the current configuration results in an updated configuration written 42 to the memory of the search engine 2 or a storage location accessible by the search engine. The update configuration then becomes the current configuration 11 in a subsequent time period.

In some embodiments, the previous configuration and at least a certain number of previous configurations is stored in a memory of the search engine 2 or accessible to the search engine 2 for logging reasons. For example, a certain number of previous configurations, e.g. the last three configurations, may be used to update the current configuration 11. As discussed above and below, configurations may also include explorations for further optimizations. Hence, for example, a past exploration which did not yield a more efficient configuration setting does not need to be taken again in one of the next configurations. Hence, information about such previous configurations may be kept and may influence a number of future configuration updates. Likewise, previous sustainability scores as further explained below may be stored (e.g. as part of the configuration) in order to log performance, quality-of-service and efficiency indications over time and utilize such indicators for future configuration update.

The current configuration 11 is updated 30 based on the logged states of the search engine 2 in terms of technical processing resources and quality-of-service indicators from processing multiple previous search requests in the given time frame. Log entries from multiple logged states of the search engine 2 may also be accumulated and form the basis of the update of the configuration of the search engine 2 in an accumulated form, e.g. by way of accumulated values (e.g. accumulated response times for a certain type of search requests processed during the given period of time) and/or average values (e.g. average response time for a certain type of search requests processed during the given period of time). Updating the current configuration 11 based on such accumulated representations of logged states of the search may also consider the standard deviation (i.e. dispersion vs. mean), and thus may focus on the majority of search request processing as opposed to rarer variations.

In some embodiments, the configuration 11 is updated on a regular basis, such as on a periodic basis. For example, the configuration 11 may be updated every 8 hours on the basis of log files of the last 24 hours. In some embodiments, the configuration 11 is updated in an event-triggered way, for example in the event of a cache update, of an update of the computation rules, triggered by an administrator, and the like. In some embodiment, updating the configuration 11 may be triggered based on a given number of search requests, e.g. every million search requests, or a number of client selections, e.g. every 10,000^{th} selection).

By updating the configuration 11 and applying the updated configuration for processing search request during a next period of time, the present methodologies form a feedback loop according to which determined relations between technical processing resources employed and quality of service achieved for search request processing during previous periods of time can be evaluated and used to further improve or fine-tune search request processing in future time periods. For example, the updated configuration may allow the search engine 2 to utilize less technical processing resources in order to obtain search results with a quality of service that satisfies the client 7 issuing the search request and is thus able to save processing resources while obtaining a likewise acceptable search response to the client 7. Hence, sustainability of the search system 1 may be improved.

In some embodiments, in order to facilitate updating the configuration 11, the search engine 2 determines 28 a sustainability score (FIG. 3) which is indicative of an environmental impact of the processing resources utilized for determining the number of search results. The sustainability score may form a part of the current configuration 11 and may e.g. by written 41 to the configuration 11 after its determination (FIG. 3). By way of the sustainability score, the various utilized technical resources are translated into energy metrics which represent e.g. a carbon emission footprint of the technical processing resources employed for the search request processing, or more generally GHG (green house gas) emissions, encompassing carbon dioxide, methane, and others, and electrical energy consumption (e.g. in kWh).

Metrics to calculate the sustainability score may be defined. Such metrics do not necessarily correspond to actual carbon emission of a data center or facility in which the search system 1 operates. The actual carbon emissions may depend on an energy mix of the data center, e.g. the percentage of renewable energies consumed by the data center. Likewise, the sustainability score is generally independent from any carbon neutralization measure which the operator of the search system 1 may or may not employ. The sustainability score may reflect an energy efficiency (e.g. code optimization) or hardware efficiency (e.g. more recent processors) utilized by the search system 1. The sustainability score may also represent a measure of digital resources mobilized during computation.

For example, the sustainability score may reflect a normalized carbon dioxide (CO2) value for each technical resource (e.g. CPU, memory, network bandwidth, etc.) that was used to process a search request or a number of search requests. If the processing of two search requests use the same technical resources of the search system 1, the sustainability score is the same for both processings. The sustainability score is lower if the technical processing resource consumption is smaller (i.e. less costly search processing in terms of processing resources, and/or less search requests processed during a given time period), and the sustainability score is higher if the technical processing resource consumption is higher (i.e. more costly search processing in terms of processing resources, and/or more search requests processed during a given time period).

The sustainability score may be utilized in various ways. For example, the sustainability score may render heterogeneous technical resources utilized by the search engine 2 to process one or multiple search requests comparable and may thus represent a degree of technical resource utilization over time. The sustainability score may also be set in relation to other measures, such as quality of service indicators, e.g. the search result selection rate. Such relation may indicate which technical footprint led to which degree of quality of service. This relation may be included in the sustainability score itself. For example, one, some, or all of the aforementioned quality-of-service-indicators are used to ensure a certain , level of quality in the search response and may be used to weight the sustainability score (target function).

A goal of the finetuning of determining the processing parameters for processing search requests over time may be to improve the relation between achieved quality of service and technical footprint (as represented by the sustainability score) of the search processing. If, for example, a similar search result selection rate can be achieved during a period of time with employing less processing resources, this relation between achieved quality of service and technical footprint is improved and the search processing efficiency of the search system 1 is increased.

For example, in some embodiments, the sustainability score reflects processing parameters indicating accumulated search processing resources utilized for processing the number of search requests received within the given time period. For example, in some embodiments, the sustainability score is composed of three values: accumulated technical processing resources for all searches in last 24 hours, number of client selections (e.g. follow-on searches, bookings, reservations, purchases, etc.), carbon dioxide costs divided by number of client selections. Any specific implementations of the sustainability score such as using other quality of service parameter(s) are envisaged.

The sustainability score may be utilized as a part of the current configuration 11, i.e. as a measure to determine the processing parameters for processing a present search request. The sustainability score may also utilized to update the current configuration 11. For example, if the sustainability score for the current given time period indicates that more processing resources have been consumed in the given time period than for the previous time period, the update configuration may reflect this and provide updated processing parameters which may cause a lower consumption of technical resources in the next time period. The sustainability score may also be utilized for reporting 32 purposes (FIG. 3), i.e. to indicate the processing efficiency of the search engine 2 over time.

In some embodiments, the search engine 2 determines that a value of accumulated quality-of-service indicators for the number of search requests received within the given time period exceeds a quality-of-service threshold. In response to determining that a value of accumulated quality-of-service indicators for the number of search requests received within the given time period exceeds the quality-of-service threshold, the search engine 2 updates the current configuration 11 to reduce the search processing resources to be utilized to process future search requests. This threshold-based control mechanism allows to monitor and track the processing resources utilized by the search engine 2 and keep the processing resources within given limits, even in time of high load, e.g. a high frequency of incoming search results in a certain time period. On the other hand, the update of the configuration 11 may also lead to relaxed constraints, e.g. if the quality-of-service indicators according to the log 38 are significantly below the threshold (meaning that the quality of service of the search engine 2 observed by the client 7 is likely considered to be insufficient), the configuration may be updated to allow the search engine to employ more processing resources in the next period of time. In other words, in some embodiments, in response to determining that the value of accumulated quality-of-service indicators for the number of search requests received within the given time period exceeds the quality-of-service threshold, the search engine 2 updates the current configuration 11 to increase the search processing resources to be utilized to process future search requests. This will cause an increase of the observed quality of service.

As mentioned above, in some embodiments, the configuration update functionality may be implemented by use of a reinforcement learning algorithm'and model which may also look for local improvements of search processing efficiency by way of explorations. In these embodiments, the sustainability score may steer the exploration and may serve as an assessment to which extent the outcome of an exploration is more efficient than the previous configuration according to an exploitation mode. For example, the sustainability score is used as a reward for one or more next time periods and configuration update iterations: if the sustainability of the exploration mode is lower, the exploration has yielded an improved processing efficiency. If the sustainability score is higher, then the exploration mode has yielded a less efficient configuration, and this configuration is not adopted in a subsequent time period and configuration iteration.

There might also be particular situation in which the current configuration 11 of the search engine 2 determines that no technical search processing resources are to be spent for processing a received search request. Such situation may, for example, arise when the budget of technical processing resources has been exhausted for the present time period for such search request, the client 7 is identified as an entity for which no processing resources should be spent (e.g. a robot, spammer, etc.) or any other reasons prescribed by the configuration 11. Hence, in response to receiving such particular search request of the number of search requests within the given time period, the search engine 2 determinies, based on the current configuration 11, to utilize no search processing resources. The search engine 2 then returns a search refusal notification to the client 7 (which may be a special type of search response 20). informing the client 7 that the search request is not processed and no search results are returned. In such event, the activities 14, 16, 18 of FIG. 2 and activity 24 of FIG. 3 are not executed. However, this zero processing is logged 26 and also influences the computation 28 of the sustainability score for the present period of time.

The following illustrates a non-limiting, simplified example for calculating the sustainability score and updating the configuration 11. The following example is located at a per day timescale and only refers to a minimum of processing parameters as well as a simplified calculation of the sustainability score. Note that in practical applications, updating and, e.g. exploration by way of reinforcement learning, may be implemented to be significantly more dynamic and granular.

The example starts on day 1 with a baseline configuration, i.e. a default configuration. The search engine 2 receives 100 search requests. Each of these search requests is processed by using three CPUs. There are ten client selections 22 in response to the provision of the search responses 20. The sustainability score is determined to be 30:1 (30 CPUs employed for one client selection).

On day 2, the configuration 11 is updated in order to explore effect of changing the processing parameter. The search engine 2 again receives 100 search requests, wherein 50 of the search requests (which may be randomly selected) are again processed with three CPUs with the same outcomes as on day 1 before (for reasons of simplicity), i.e. 5 client selection, so that the sustainability score for these 50 search requests is again 30:1. The other 50 search requests are processed by using only 2.5 CPUs (less processing resources utilizes). Also for these 50 search requests, five client selections are received. Hence, the client-perceived quality of service may be assessed to be the same as for the first 50 search request processings of day 2, and the sustainability score for the second 50 search requests is determined to be 25:1 (25 CPUs employed for one client selection). Accordingly, the second bucket (second 50 search request processings) are granted a positive rewards by the reinforcement learning model.

On day 3, as a consequence of the exploration on day 2, the configuration of the second is applied to the whole traffic of search requests (= exploitation). Again, 100 may be received with the same outcomes as the day before (to simplify the problem), so that the sustainability score is again calculated to be 25:1.

On day 4, the configuration 11 is once again updated to explore impact of changing the processing parameter. For example, first 50 of overall 100 search requests handled on day 4 are processed by 2.5 CPUs like on day 3, but second 50 search requests are processed using only two CPUs (employing still less processing resources). For the second 50 search request processings, three client selections are received. The sustainability score for this bucket is calculated to be 33:1 (33 CPUs employed for one client selection). In this case, the reward of the exploration is negative as the sustainability score has yielded a less favourable ratio than before.

On day 5, given that the exploration configuration of day 4 has not yielded any improvement, the previous configuration (using 2.5 CPUs) is again applied to the whole set of search requests received.

This simplified example can be extended to any set of different processing parameters (explorations and configuration updates may occur for multiple processing parameters), to any number of search requests and client selections, to any time scale and also encompass any variations and refinements discussed above and below.

In some embodiments, logging 26 (FIG. 3) may also include logging of post-search-request-handling activities such as if, when and/or how the client 7 reacted to the search response 20, e.g. by way of client selection 22. For example, the logged state may also reflect if and which search results returned to the client 7 were selected by the client 7. The logged state may then also include characteristics of such selected search results, such as identifiers, parameters and values of search results which have been selected by the client 7.

The aforementioned accumulation of log entries used for updating the configuration 11 may then also include accumulated information of such selected search results, e.g. which search results, which types of search results, which parameter values have been selected how often. For example, in a network routing request use case, the accumulated log states may indicate which network routes have been selected by clients 7 particularly often. The accumulated log entries may also include more fine-grained information, such as which client type selected which search results.

In some of these embodiments, an additional weighting or normalization may be employed in order to differentiate between different client selections 22. Different types of selected search responses or selected search responses with different parameter values may be weighted differently. Hence, not all client selections 22 may have the same impact on the update of the configuration 11, but some client selections 22 may have a higher influence than others due to different weights. As an illustrative, non-limiting example, in a network routing use case, selected network routes with encryption may be weighted higher than selected network routes without encryption.

Recalculation of the sustainability score and updating the configuration 11 may then be based on such extended accumulated logged states of the search engine 2. For example, the carbon emissions representative of the processing resources may be set in ratio to the weighted client selections, being indicative of the client-perceived quality of service of the search request processing by the search engine 2. Hence, in such scenarios, a lower ratio is desirable (efficient use of processing resources yielding decent search response quality of service). By way of the aforementioned weighting, the search request processing having yielded a specific (higher weighted) selected search result may also be assessed to be likewise efficient as multiple other (lower weighted) selected search results.

In summary, the present methodologies enable a search engine 2 to fine-tune the utilization of technical processing resources for processing search requests, taking into account the degrees of freedom of technical processing resources to be used as well as quality-of-service indicators for a search request. Due to a feedback loop, the manner and characteristics of search request processing in a given time period can be used to update the configuration which controls the determination of processing parameters for a search request. A sustainability score represents a footprint of technical processing resources utilized for processing search requests in relation to one or more quality-of-service indicator(s) such as a client feedback rate.

Note that the present methodologies as described above, if applied by a search engine . 2, do not necessarily have to applied for all search requests received by the search engine. For example, the search engine 2 may apply the methodologies for some types of search requests, but may not apply the methodologies for other types of search requests which are then handled in a traditional manner. Or the search engine 2 may apply the methodologies for search requests from some clients 7, but not for search requests from other clients. Or the search engine may apply the methodologies during some periods of time, but not during other periods of time, etc.

As mentioned above, the present methodologies may be provided by a computer-implemented method, by an apparatus such as a controller as well as by computer program instructions which, when executed by at least one processor, realizes the operations described above.

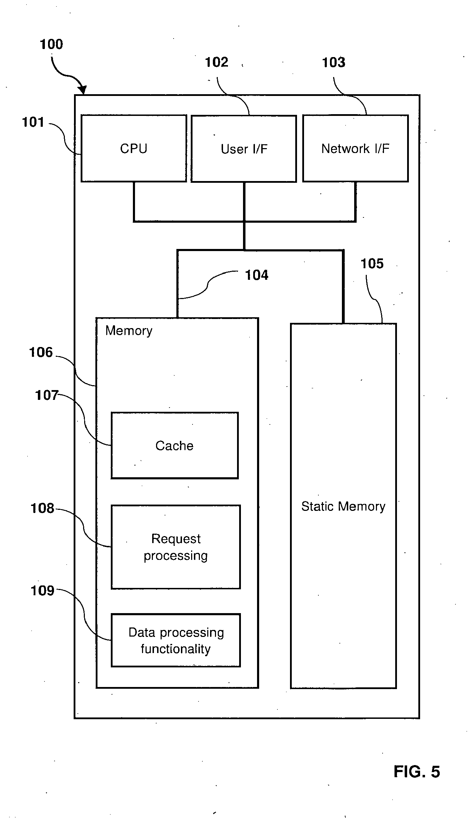

FIG. 5 is a diagrammatic representation of the internal components of a computing machine 100 implementing the functionality of the search engine 2 as well as other entities described herein such as the clients 7. The computing machine 100 includes a set of instructions to cause the computing machine 100 to perform any of the methodologies discussed herein when executed. The computing machine includes at least one processor 101, a main memory 106 and a network interface device 103 which communicate with each other via a bus 104. Optionally, the computing machine 100 may further include a static memory 105 and a disk-drive unit. A video display, an alpha-numeric input device and a cursor control device may be provided as examples of user interface 102. The network interface device 103 connects the computing machine 100 to the other components of the distributed search system 1 such as the clients 7 or the external data sources 9.

The main memory 106 may store temporary program data to facilitate the functionality of the computing machine 100 such as the search engine. For example, the main memory 106 may store computer program data 107 to implement functionalities to receive and process search requests and computer program data 108 to implement functionalities to determine the processing parameters as well as the other functionalities of the search engine 2 as described above. If the computing machine 100 implements the search engine, the main memory 106 may also store a file or database 109 holding the configuration 11 and or the log 38. The same may also be held in the static memory 105.

A set of computer-executable instructions (computer program code 108) embodying any one, or all, of the methodologies described herein, resides completely, or at least partially, in or on a machine-readable storage medium, e.g., the main memory 106. For example, the instructions 108 may include software processes implementing the functionality to identify a number of search results corresponding to the search request.

The instructions 108 may further be transmitted or received as a propagated signal via the Internet through the network interface device 103 or via the user interface 102. Communication within computing machine 100 is performed via a bus 104. Basic operation of the computing machine 100 is controlled by an operating system which is also located in the main memory 106, the at least one processor 101 and/or the static memory 105.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A method for processing a search request in a computerized search system, the method comprising:
receiving the search request at a search engine of the computerized search system;
determining, based on a current configuration of the search engine and the search request, a number of processing parameters indicative of processing resources of the search engine to be utilized for processing the search request;
determining, by the search engine, a number of search results for the search request utilizing the processing resources of the search engine according to the number of processing parameters;
returning, by the search engine, at least a part of the number of search results;
determining a number of quality-of-service indicators for the returned search results;
logging a state of the search engine indicating the actual processing resources of the search engine utilized for determining the number of search results and the number of quality-of-service indicators for the returned search results;
updating the current configuration of the search engine based on the logged state of the search engine and the determined number of quality-of-service indicators to obtain an updated configuration of the search engine for processing future search requests.

2. The method of claim 1, wherein the processing parameters include one or more of a degree of parallelization, a number of search results to be determined, a number of search results to be returned, an amount of central processing unit resources, a polling measure, a caches utilization measure, a machine learning utilization measure, a routing indication, a search processing time limit.

3. The method of claim 1 or claim 2, wherein the quality-of-service indicators include a search result selection rate, a response time, a search result accuracy, a search result diversity measure.

4. The method of any one of claims 1 to 3, further comprising determining a sustainability score being indicative of an environmental impact of the processing resources utilized for determining the number of search results, the sustainability score being a part of the current configuration.

5. The method of claim 4, wherein the search engine utilizes a reinforcement learning model to determine the number of processing parameters based on the sustainability score.

6. The method of any one of claims 4 or 5, wherein the current configuration is applied for a number of search requests received within a given time period.

7. The method of claim 6, wherein updating the current configuration is performed at the end of the given time period based on logged states and the quality-of-service indicators for the number of search requests received within the given time period.

8. The method of claim 6 to 7, wherein the sustainability score reflects processing parameters indicating accumulated search processing resources utilized for processing the number of search requests received within the given time period.

9. The method of any one of claims 6 to 8, further comprising:
in response to determining that a value of accumulated quality-of-service indicators for the number of search requests received within the given time period exceeds a quality-of-service threshold, updating the current configuration to reduce the search processing resources to be utilized to process future search requests.

10. The method of claim 9, further comprising:
in response to determining that the value of accumulated quality-of-service indicators for the number of search requests received within the given time period exceeds the quality-of-service threshold, updating the current configuration to increase the search processing resources to be utilized to process future search requests.

11. The method of any one of claims 6 to 10, comprising:
in response to receiving one search request of the number of search requests within the given time period, determining, based on the current configuration, to utilize no search processing resources;
returning a search refusal notification.

12. The method of any one of claims 1 to 11, updating the current configuration is performed at a periodic basis.

13. A search system being arranged to perform the method of any one of claims 1 to 12.

14. A computer program with program instructions which, when executed by at least one processor, implements the method of any one of claims 1 to 12.
